# EUROPEAN PATENT SPECIFICATION

(11) **EP 1 096 166 B1**
(45) Date of publication and mention of the grant of the patent: **08.12.2004**
(21) Application number: 00309003.2
(22) Date of filing: 13.10.2000
(51) Int. Cl.: F16D 55/08, F16D 65/50

(54) **Actuator assembly for a ball-and-ramp brake**
Betätigungsvorrichtung für eine Kugel-Rampen- Bremse
Actionneur pour frein à rampes et billes

(30) Priority: 27.10.1999 GB 9925304
(43) Date of publication of application: 02.05.2001
(73) Proprietor: Meritor Heavy Vehicle Braking Systems (UK) Limited, Reading, Berkshire RG6 1LA (GB)
(72) Inventor: Esau, Peter Ronald, Coed Eva, Cwmbran NP44 4TE (GB)
(74) Representative: Jones, John Bryn

(56) References cited:
- DE-C- 361 998
- US-A- 1 959 116
- US-A- 2 922 317
- US-A- 3 885 650

## Description

This invention relates to an actuator assembly for a ball-and-ramp brake.

Brakes of the type referred to herein as ball-and-ramp brakes are known comprising an actuator having two actuator elements which, in use, are forced apart by balls or rollers acting on ramps defined by inwardly facing surfacing of the elements as the actuator elements are displaced relative to one another. The actuator elements are commonly used to drive friction pads into contact with braking surfaces of a vehicle body.

US3885650 shows a ball-and-ramp actuator for a brake. US2922317 shows a slack adjuster for brake cams.

According to the invention, there is provided an actuator assembly for a ball-and-ramp brake as defined in accompanying claim 1. This facilitates convenient and effective provision of a substantially constant relationship between the force exerted on the cable by an operator and the braking force provided by the actuator assembly throughout the operating life of a set of brake linings.

The cam is preferably moveable by a lever.

This facilitates accommodation of brake lining wear by adjusting the brake off position of the actuator elements relative to one another, and ensures a relatively small overall operating travel for the lever. The space required for accommodating the lever movement throughout the operating life of the brake is thus reduced. Also, maintenance of a constant relationship between an input force applied to the lever and the resultant braking force is facilitated.

Preferably the lever is operable by a cable. By providing adjustment of cable travel at the actuator assembly the relative dispositions of the cable and the actuator assembly are maintained substantially constant, further facilitating a substantially constant relationship between input force and braking force.

The cam and the lever may be pivotably mounted about a common pivot point on one of the actuator elements.

Adjustment of the relative positions of the lever and the cam is conveniently effected by adjusting the angular position of the cam about the common pivot point relative to the lever.

Preferably, the cam is shaped such that movement of a cam follower mounted to the other said actuator element is substantially proportional to movement of the lever.

Preferably, the cam has a first cam surface for acting against the cam follower and a second cam surface for acting against the adjusting means.

The first cam surface may be shaped such that movement of the cam follower is substantially proportional to movement of the lever.

Preferably the assembly is provided with adjusting means operable to maintain the resultant relative displacement of the actuator elements substantially proportional to the travel of the cable for all conditions of brake lining wear.

The adjusting means may be operable to adjust the relative positions of the cam and the lever.

In order that the invention may be better understood, an embodiment thereof will now be described, by way of example only, with reference to the accompanying drawings, in which:
Figure 1 is an end view of an actuator assembly in a ball-and-ramp brake;
Figure 2 is a side view showing the assembly;
Figure 3 is a schematic drawing showing the position of a cam of the assembly with unworn brake linings fitted and in a brake off condition corresponding to the conditions shown in Figure 1; and
Figure 4 is a schematic drawing showing the position of the cam with the brakes applied and with worn brake linings fitted.

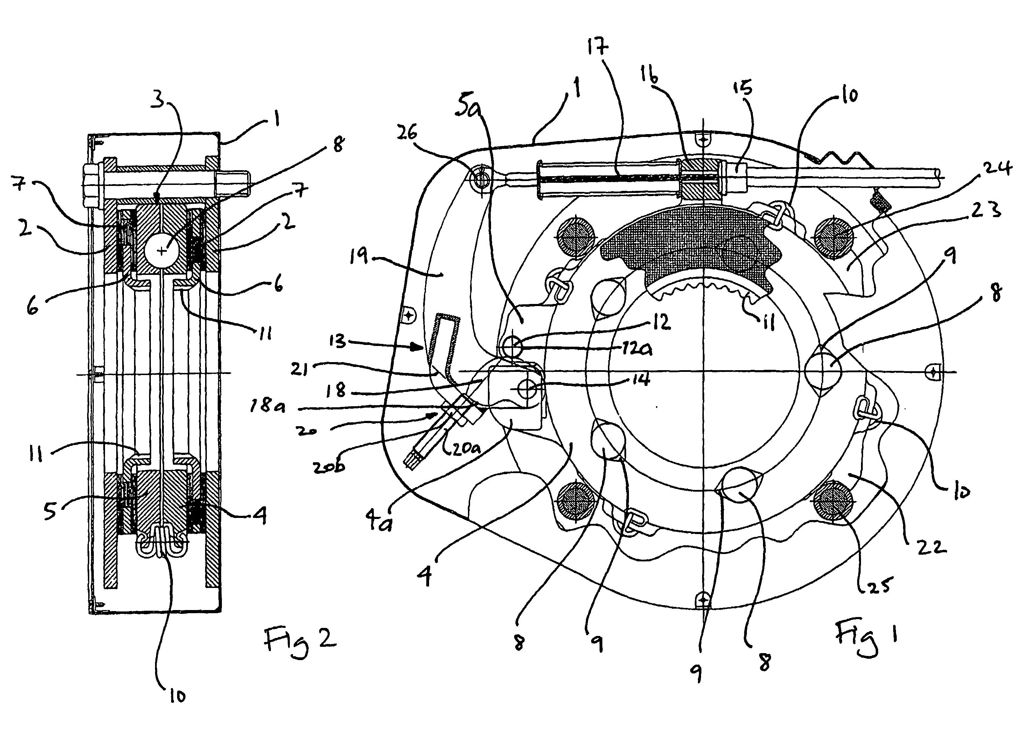

The ball-and-ramp brake in Figures 1 and 2 includes a casing 1 fixably securable to a vehicle body (not shown) and braking surfaces 2 fixed relative to the casing. An actuator 3 comprising first and second actuator elements 4,5 is disposed within the casing 1 between the two braking surfaces 2. Interposed between each actuating member 4,5 and a respective one of the braking surfaces 2 is a respective friction disc 6 provided with friction pads 7. The friction discs 6 are disclosed in greater detail in EP-A-1 091 136.

To operate the brake, the actuator elements 4,5 are angularly displaced relative to one another. Balls 8 acting between circumferentially inclined ramp surfaces 9 defined by respectve inwardly facing surfaces of the actuator elements 4,5 then drive the actuator elements 4,5 apart against the action of springs 10 in a direction lateral to the direction of relative displacement of the actuator elements 4,5 in a manner known in the art. The pads 7 of the friction discs 6 are thus forced against the braking surfaces 2 thereby applying the brake.

In use, for example when fitted in a vehicle, the friction discs 6 may be connected to a shaft (not shown) for rotation therewith, and the brake is then used to brake rotation of the shaft. In the particular embodiment shown in the Figures, splines 11 are provided for connecting the friction discs 6 to a shaft assembly (not shown). Where the brake is provided in the form of a vehicle handbrake, the braked shaft may be a transmission shaft.

Each actuator element 4,5 is provided with a respective lug 4a,5a. The lug 5a is provided with a cam follower in the form of a roller 12 having a surface 12a. The lug 4a has a brake actuating assembly, shown generally as 13, mounted thereto about a pivot 14 for angular displacement with the actuator element 4. The brake actuating assembly 13 is operable by a Bowden cable having an outer sheath 15 which abuts a lug 16 on the actuator element 4 and an inner cable portion 17 pivotably mounted to the brake actuating assembly 13.

The brake actuating assembly 13 comprises a displacer member in the form of a cam 18 which is mounted with a lever 19 to the lug 4a for pivotal movement together with the lever 19 about the pivot 14. The cam 18 is adjustably rotatable about the pivot 14 relative to the lever 19 by adjusting means in the form of an adjuster screw assembly 20. The lever 19 may be fabricated from metal plate and may be provided with a support portion 21 for receiving and supporting the adjuster screw assembly 20. The support portion 21 in the embodiment shown in Figures 1 and 2 has been partially bent out of the plane of the original metal plate and welded to the side of the lever 19.

In an alternative embodiment (not shown), a discretely fabricated support may be welded to the lever 19 for receiving and supporting the adjuster screw assembly 20.

In a still further embodiment (not shown), an automatic adjusting means may be provided for automatically adjusting the angular position of the cam 18 relative to the lever 19 to correspond to the amount of brake lining wear, to automatically maintain the clearance between the friction pads 7 and the braking surfaces 2 within predetermined limits.

The adjuster screw assembly comprises an adjuster screw 20a and a lock nut 20b. One end face of the screw 20a acts against a surface 18a of the cam 18 to prevent movement of the cam 18 anticlockwise in the orientation shown in Figure 1 under the influence of the force exerted by the springs 10 on the actuator element 5. Movement of the cam away from the adjuster screw 20a (upwards in the orientation shown in Figure 1) is restricted by this spring force acting through lug 5a and the cam follower 12.

To adjust the cam 18 clockwise relative to the lever 19, the lock nut 20b is loosened and the screw 20a screwed inwardly of the actuator assembly (upwardly in the orientation shown in Figure 1). The screw's end face acts against the surface 18a which provides a cam action to adjustably move the cam 18 against the force exerted by the cam follower 12 to a new position. The lock nut 20b is then retightened to lock the screw 20a in the new position. This adjustment effectively resets the relative positions of the actuator elements 4,5 in the brake off condition and reduces the travel required by the cable 16,17 to reach the brake fully on condition.

To operate the brake, in use, an operator applies longitudinal force to the cable 16,17. This force is transmitted through the lever 19 to the cam 18 which rotates about pivot 14 and acts on the follower surface 12a to angularly displace the actuator elements 4,5 relative to one another.

The actuator 3 as a whole is prevented from rotating relative to the casing 1 by virtue of a lug 22,23 on each actuator element 4,5 coacting with a respective structural member 24,25 of the brake.

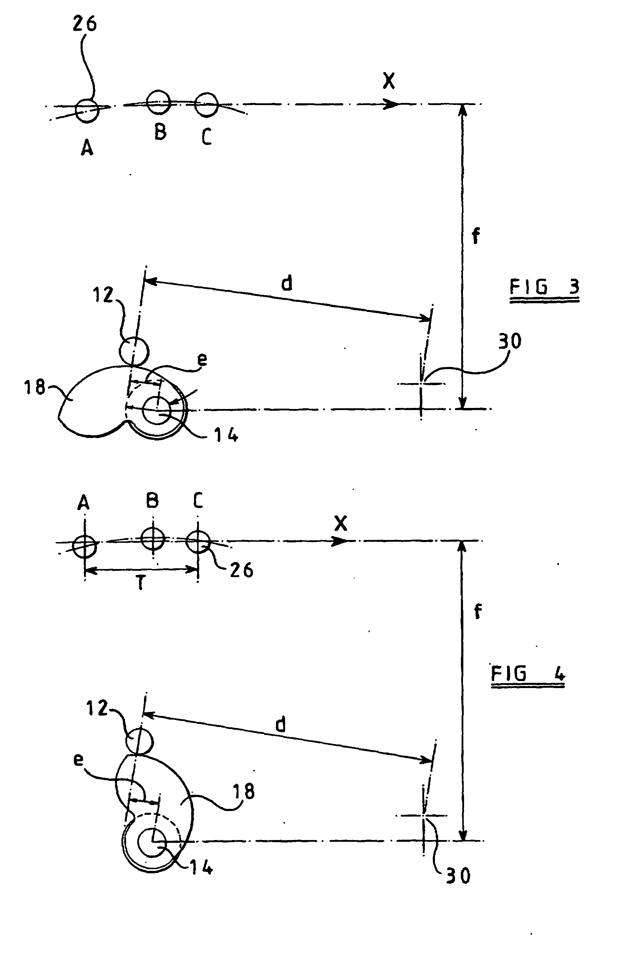

Figures 3 and 4 illustrate the angular position of the cam 18 about the pivot 14 for the brake off condition with new brake linings (Figure 3) and, following adjustment, for the brake on condition with the brake linings fully worn (Figure 4). Figures 3 and 4 also illustrate three positions of a pivotal connection 26 interconnecting the cable 16,17 and the lever 19. Position A illustrates the brake off position of the connection. Position B illustrates the brake fully on position with the cam 18 adjusted to provide minimum clearance between the friction pads 7 and braking surfaces 2. Position C illustrates the brake fully on position with the cam 18 positioned to provide maximum permitted lever travel, just prior to adjustment.

In use, once the travel between the brake off position A and the brake worn position reaches a predetermined size, i.e. position C, the adjuster screw assembly 20 is operated to adjust the angular position of the cam 18 about the pivot 14 relative to the lever 19. This causes a corresponding adjustment in the relative positions of the actuator elements 4,5 in the brake off condition, thereby compensating for brake lining wear by providing a minimum clearance between the friction pads 7 and braking surfaces 2. As a consequence of this adjustment, the travel of the lever/cable connection 26 in the brake on condition will have been correspondingly adjusted to provide a new brake on position similar to the brake on position B when the linings were new. Following adjustment, when a predetermined amount of further wear has occurred, and the travel of the cable between the brake off and brake on positions has increased once again, further adjustment can be made using the adjuster screw assembly 20 as before.

Limiting the maximum cable travel over the life of a set of brake linings in this way ensures that movement of the lever 19 is minimised. This facilitates accommodation of the lever in a relatively confined space within the casing 1. Furthermore, the cam 18 is shaped such that relative angular displacement of the actuator elements 4,5 is substantially proportional to cable travel throughout the range of cable travel permitted before adjustment of the cam 18 is effected. Since the lateral force applied by the actuator to the friction discs 6 is generally proportional to the relative angular displacement of the actuator elements 4,5, the resulting braking force has a generally constant relationship with the force applied by an operator to the cable 16, 17 throughout the life of a set of brake linings.

In a typical embodiment, with the cam set to a minimum clearance of 0.2mm per face for new brake linings, the cable travel to apply the brake is 29.8mm causing a roller 12 displacement of 3.043mm. With the cam adjusted to accommodate fully worn linings, a cable travel of 29.8mm causes a roller 12 displacement of 3.095mm. Thus it can be seen that output (roller 12) travel is substantially proportional to input (cable 16,17) travel over the life of the brake linings.

Figures 3 and 4 also show a distance d, between the line of action of the force between the cam 18 and the roller 12 and the centre of rotation 30 of the actuator elements 4,5, and a distance e, between the line of action of the force between the cam 18 and the roller 12 and the centre of the pivot 14. The cam is shaped and arranged such that the relationship between the distances d and e remains substantially the same for all operating positions of the cam 18. Also, the distance f between the line of action X of the cable 16,17 and the centre of the pivot 14 remains substantially constant for all operating positions of the cam. It should therefore be clear that the relationship between the cable force applied in direction X and the torque exerted via the roller 12 about the centre 30 remains substantially constant.

The actuator assembly described above with reference to the drawings facilitates maintenance of consistent braking performance as the brake linings wear. No change in performance is noticeable between new and worn brake lining conditions, as is common in brake assemblies where cable length is adjusted to compensate for brake lining wear. Using the cam 18 as an actuator displacer member in conjunction with the lever 19 provides a convenient lever ratio for ease of brake application by an operator, and the design of the cam profile enables this ratio to be maintained at a substantially constant level as lining wear takes place.

The performance of the assembly is greatly enhanced by arranging for adjustment in response to lining wear to be effected by moving the cam 18 relative to the lever 19. The assembly provides substantially constant actuator displacement for a given amount of cable travel, irrespective of the cam position. A substantially constant relationship between cable force and braking force is also provided.

## Claims

1. An actuator assembly for a ball-and-ramp brake, the assembly comprising an actuator (3) having two actuator elements (4, 5) and a cam (18) pivotably mounted to one of said actuator elements (4) so as to be operable by operating means (17) to act against a cam follower (12) of the other of said actuator elements (5) to cause relative displacement of the actuator elements (4, 5) for causing movement of the actuator elements apart in a direction lateral to the direction of relative displacement, the arrangement being such that the resultant relative displacement of the actuator elements (4, 5) is substantially proportional to travel of the operating means (17).

2. An actuator assembly as claimed in claim 1, wherein the cam (18) is moveable by a lever (19) and is shaped such that movement of the cam follower (12) is substantially proportional to movement of the lever (19).

3. An actuator assembly as claimed in claim 2, wherein the lever (19) is operable by a cable (17).

4. An actuator assembly as claimed in claim 2 or 3, wherein the cam (18) and the lever (19) are pivotably mounted about a common pivot point (14) on one of the actuator elements (4).

5. An actuator assembly as defined in claim 4, wherein adjustment of the relative positions of the lever (19) and the cam (18) is effected by adjusting the angular position of the cam (18) about the common pivot point (14) relative to the lever (19).

6. An actuator assembly as claimed in any one of the preceding claims, wherein the cam (18) is shaped such that movement of a cam follower (12) mounted to the other said actuator element (5) is substantially proportional to movement of the lever (19).

7. An actuator assembly as claimed in any one of the preceding claims, wherein the cam (18) has a first cam surface for acting against the cam follower (12) and a second cam surface (18a) for acting against the adjusting means (20).

8. An actuator assembly as claimed in any one of the preceding claims, wherein the first cam surface is shaped such that movement of the cam follower (12) is substantially proportional to movement of the lever (19).

## Patentansprüche

1. Aktuatorbaugruppe für eine Kugelbremse, wobei die Baugruppe einen Aktuator (3) mit zwei Aktuatorelementen (4, 5) und einen Nocken (18) umfasst, der an einem der Aktuatorelemente (4) drehbar angebracht ist, um durch Betätigungsmittel (17) betätigt werden zu können und gegen einen Nosckenabtaster (12) des anderen Aktuatorelements (5) zu wirken, um eine relative Verschiebung der Aktuatorelemente (4, 5) zu verursachen, damit sich die Aktuatorelemente in eine Richtung quer zu der Richtung der relativen Verschiebung auseinander bewegen, wobei die Anordnung dergestalt ist, dass die resultierende relative Verschiebung der Aktuatorelemente (4, 5) im Wesentlichen proportional ist zum Verstellweg der Betätigungsmittel (17).

2. Aktuatorbaugruppe nach Anspruch 1, bei welcher der Nocken (18) durch einen Hebel (19) bewegt werden kann und so geformt ist, dass die Bewegung des Nosckenabtasters (12) im Wesentlichen proportional ist zur Bewegung des Hebels (19).

3. Aktuatorbaugruppe nach Anspruch 2, bei welcher der Hebel (19) durch ein Seil (17) betätigt werden kann.

4. Aktuatorbaugruppe nach Anspruch 2 oder 3, bei welcher der Nocken (18) und der Hebel (19) um einen gemeinsamen Schwenkpunkt (14) auf einem der Aktuatorelemente (4) schwenkbar gelagert sind.

5. Aktuatorbaugruppe nach Anspruch 4, bei welcher die Einstellung der relativen Lage des Hebels (19) und des Nockens (18) durch Einstellen der Winkelposition des Nockens (18) um den gemeinsamen Schwenkpunkt (14) relativ zu dem Hebel (19) erfolgt.

6. Aktuatorbaugruppe nach einem der vorhergehenden Ansprüche, bei welcher der Nocken (18) so geformt ist, dass die Bewegung eines an dem anderen Aktuatorelement (5) angebrachten Nosckenabtasters (12) im Wesentlichen proportional ist zur Bewegung des Hebels (19).

7. Aktuatorbaugruppe nach einem der vorhergehenden Ansprüche, bei welcher der Nocken (18) eine erste Nockenfläche zum Angreifen an dem Nosckenabtaster (12) und eine zweite Nockenfläche (18a) zum Angreifen an der Einstelleinrichtung (20) hat.

8. Aktuatorbaugruppe nach einem der vorhergehenden Ansprüche, bei welcher die erste Nockenfläche so geformt ist, dass die Bewegung des Nosckenabtasters (12) im Wesentlichen proportional ist zur Bewegung des Hebels (19).

## Revendications

1. Ensemble d'actionneur pour un frein à bille et à rampe, l'ensemble comprenant un actionneur (3) possédant deux éléments d'actionneur (4, 5) et une came (18) montée de manière pivotante sur l'un desdits éléments d'actionneur (4) de manière à pouvoir être actionnée à l'aide d'un moyen d'actionnement (17) pour agir contre un suiveur de came (12) de l'autre desdits éléments d'actionneur (5) afin de provoquer le déplacement relatif des éléments d'actionneur (4, 5) pour entraîner un mouvement d'éloignement des éléments d'actionneur dans une direction latérale par rapport au sens de déplacement relatif, l'agencement étant tel que le déplacement relatif résultant des éléments d'actionneur (4, 5) est sensiblement proportionnel à la distance de déplacement du moyen d'actionnement (17).

2. Ensemble d'actionneur selon la revendication 1, dans lequel la came (18) est déplaçable à l'aide d'un levier (19) et est conçue de telle sorte que le mouvement du suiveur de came (12) soit sensiblement proportionnel au mouvement du levier (19).

3. Ensemble d'actionneur selon la revendication 2, dans lequel le levier (19) est actionnable à l'aide d'un câble (17).

4. Ensemble d'actionneur selon la revendication 2 ou 3, dans lequel la came (18) et le levier (19) sont montés de manière pivotante autour d'un point de pivotement commun (14) sur l'un des éléments d'actionneur (4).

5. Ensemble d'actionneur selon la revendication 4, dans lequel l'ajustement des positions relatives du levier (19) et de la came (18) est effectué en ajustant la position angulaire de la came (18) autour du point de pivotement commun (14) par rapport au levier (19).

6. Ensemble d'actionneur selon l'une quelconque des revendications précédentes, dans lequel la came (18) est conçue de telle sorte que le mouvement d'un suiveur de came (12) monté sur l'autre desdits éléments d'actionneur (5) soit sensiblement proportionnel au mouvement du levier (19).

7. Ensemble d'actionneur selon l'une quelconque des revendications précédentes, dans lequel la came (18) possède une première surface de came pour agir contre le suiveur de came (12) et une seconde surface de came (18a) pour agir contre le moyen d'ajustement (20).

8. Ensemble d'actionneur selon l'une quelconque des revendications précédentes, dans lequel la première surface de came est conçue de telle sorte que le mouvement du suiveur de came (12) soit sensiblement proportionnel au mouvement du levier (19).
